# FASCICULE DE BREVET EUROPEEN

(11) **EP 1 460 910 B1**
(45) Date de publication et mention de la délivrance du brevet: **01.07.2009**
(21) Numéro de dépôt: 02801096.5
(22) Date de dépôt: 03.12.2002
(51) Int. Cl.: A43D 3/02, B29D 31/50

(54) **FORME AVEC DISPOSITIF DE PREHENSION, POUR LA FABRICATION DE CHAUSSURES**
LEISTEN MIT GRIFFVORRICHTUNG ZUM HERSTELLEN VON SCHUHEN
LAST WITH GRIP DEVICE FOR SHOEMAKING

(30) Priorité: 03.12.2001 FR 0115607
(43) Date de publication de la demande: 29.09.2004
(73) Titulaire: ETABLISSEMENTS ACTIS, 38730 Le Pin (FR)
(72) Inventeur: BLANC, Roger, F-38730 Le Pin (FR)
(74) Mandataire: Bratel, Gérard
(86) Numéro de dépôt international: PCT/FR2002/004160
(87) Numéro de publication internationale: WO 2003/047379

(56) Documents cités:
- DE-A- 3 625 901
- FR-A- 1 324 108
- FR-A- 2 135 693

## Description

La présente invention concerne une forme avec dispositif de préhension, pour la fabrication de chaussures et, plus particulièrement, une forme prévue pour être utilisée dans une installation automatique ou semi-automatique de fabrication de chaussures.

Pour la fabrication des chaussures, il est généralement connu d'utiliser des gabarits spécifiques en bois ou en matière synthétique, appelés « formes », qui reproduisent les diverses caractéristiques d'un pied : pointure, pied gauche ou droit, ainsi que le type et l'aspect de la chaussure correspondante à réaliser. C'est sur la forme que la « tige » de la chaussure est d'abord adaptée, puis que la partie de la semelle dite « première » est mise en place, et que sont aussi effectuées la plupart des autres opérations de fabrication, par exemple le cardage et l'encollage, la chaussure étant ainsi fabriquée autour de la forme.

Traditionnellement, les opérations de fabrication des chaussures sont réalisées manuellement, chaque forme garnie d'une tige de chaussure en cours de fabrication étant transportée manuellement d'une machine à une autre. Mais on connaît aussi des lignes de fabrication automatique ou semi-automatique de chaussures, dans lesquelles une chaîne, entraînant avec elle des plateaux ou palettes portant les formes, fait passer celles-ci, les unes après les autres, à un certain nombre de postes de travail situés sur la chaîne elle-même ou sur le côté de cette chaîne, des opérations successives de fabrication ou de traitement des chaussures étant effectuées à ces postes.

Dans le cadre de telles installations, les formes doivent être positionnées avec précision sur les plateaux ou palettes. De plus, ces formes doivent pouvoir être transférées, à l'aide de robots de manutention, entre des magasins de stockage de ces formes et la ligne de fabrication elle-même, ou encore entre la chaîne d'entraînement et des machines situées sur le côté de cette chaîne. Les formes doivent aussi pouvoir être immobilisées, dans des positions indexées avec précision.

A cet effet, il est déjà connu de prévoir, sur chaque forme à manipuler, un dispositif de préhension désigné comme « préhenseur », conçu pour pouvoir être saisi par une pince à mâchoires de conformation adaptée, portée par exemple par l'extrémité du bras articulé d'un robot manipulateur. Le préhenseur permet ainsi de manutentionner la forme, c'est-à-dire de la prendre, de la poser et de la verrouiller, dans une position tridimensionnelle connue. Des exemples de réalisation d'un tel préhenseur sont décrits dans les brevets français N° 2 586 909 et N° 2 705 872. En particulier, dans ce dernier document, il est montré un préhenseur qui comporte deux éléments tubulaires parallèles, conformés en « diabolo », et reliés entre eux par une plaque. Ces éléments tubulaires permettent non seulement la saisie de la forme par la pince d'un robot manipulateur, mais aussi le positionnement précis de la forme sur un plateau ou une palette, pourvu de deux broches faisant saillie vers le haut, les deux éléments tubulaires du préhenseur de la forme s'emboîtant respectivement sur les deux broches.

Les préhenseurs existants, tels que ceux décrits dans les deux brevets français N° 2 586 909 et N° 2 705 872 précités, sont fixés sur les formes par vissage. En particulier, dans le cas du préhenseur connu comportant deux éléments tubulaires parallèles, ces deux éléments sont partiellement filetés, et sont introduits dans deux trous traversants de la forme où ils sont retenus au moyen d'écrous, vissés sur leurs filetages respectifs. Un tel mode de liaison entre chaque forme et son préhenseur nécessite des opérations multiples, en particulier des opérations de perçage des formes ou autres opérations de reprise, ainsi que des opérations d'assemblage, qui sont relativement coûteuses. Surtout, ce mode de liaison entraîne une imprécision de la position du préhenseur, relativement au corps de la forme correspondante, en particulier si l'on prend en considération le mode de fabrication habituel des formes.

En effet, les formes sont traditionnellement réalisées en partant d'un bloc par exemple en bois. L'allure générale de la forme est obtenue par usinage de ce bloc sur un tour à reproduire, puis les extrémités de la forme (ayant servi à la maintenir sur le tour) sont coupées à la main, cette opération étant très peu précise. La forme doit ensuite être repositionnée sur un gabarit, pour usiner sa surface appelée à recevoir le préhenseur, et enfin sont percés, dans la forme, les trous destinés à la fixation du préhenseur, le repérage des positions de ces trous restant difficile. Ainsi, les causes d'imprécisions sont nombreuses et les erreurs s'ajoutent les unes aux autres.

Le préhenseur servant lui-même de référence pour le positionnement de la forme, sur le robot manipulateur ou sur les plateaux de la ligne de fabrication de chaussures, on comprend que cette imprécision peut conduire à un mauvais positionnement de la forme elle-même, au cours des opérations de fabrication d'une chaussure sur cette forme, d'où des erreurs ou difficultés de fabrication et, en tous cas, une reproductibilité insuffisante.

Par ailleurs, le document FR-A-1324108 décrit une forme pour la fabrication de chaussures, pourvue d'un dispositif de préhension pour sa saisie et/ou son immobilisation par des organes extérieurs complémentaires, cette forme étant réalisée comme une pièce coulée avec un insert noyé dans la matière de cette pièce et prévu pour recevoir les éléments du dispositif de préhension. Pour l'obtention d'une telle forme, on réalise d'abord une ébauche de la forme, en coulant une matière dans un moule à l'intérieur duquel a été préalablement placé l'insert, prévu pour recevoir les éléments du dispositif de préhension. Puis on met en place le dispositif de préhension, en le liant à l'insert. Cependant le document considéré ne décrit aucune opération de finition de la forme ainsi obtenue.

La présente invention vise à éviter ces inconvénients, en fournissant un mode de liaison différent entre la forme elle-même et son préhenseur, procurant une amélioration sensible de la précision du positionnement du préhenseur relativement à la forme et, par voie de conséquence, de la qualité de fabrication des chaussures elles-mêmes.

A cet effet, l'invention a essentiellement pour objet un procédé d'obtention d'une forme pour la fabrication de chaussures, pourvue d'un dispositif de préhension pour sa saisie et/ou son immobilisation par des organes extérieurs complémentaires, le procédé comprenant :
- la réalisation d'une ébauche de la forme, en coulant une matière notamment synthétique dans un moule à l'intérieur duquel a été préalablement placé un insert, prévu pour recevoir les éléments du dispositif de préhension,
- puis la mise en place du dispositif de préhension en le liant à l'insert,
ce procédé étant caractérisé par le fait que l'on réalise une finition de la forme par un usinage de l'ébauche, pour lui donner sa configuration définitive, en utilisant les éléments du dispositif de préhension, liés à l'insert, comme support et référence spatiale pour l'opération d'usinage.

Avantageusement, la face supérieure de l'insert se situe au niveau de la face supérieure du corps de la forme, cette dernière face servant de face d'appui pour le dispositif de préhension, ce qui procure une référence en hauteur précise.

Ainsi, l'idée inventive consiste à couler la matière constitutive de l'ébauche de la forme dans un moule, autour d'un insert préalablement mis en place, qui recevra le préhenseur, de sorte que ce préhenseur est déjà en place avant l'usinage de finition de la forme, qui lui donnera sa géométrie définitive. Le préhenseur peut alors servir de support et de référence spatiale, pour l'usinage final de la forme.

De cette manière, on supprime la nécessité de percer des trous dans la forme pour la fixation du préhenseur, et on supprime aussi l'imprécision d'une telle fixation. Bien plus, le préhenseur déjà en place avant usinage permet de maintenir la forme, pour son usinage, ce qui évite la tenue de la forme par ses extrémités, et offre une référence tridimensionnelle extrêmement précise pour l'usinage. Toutes opérations de reprise sont ainsi évitées.

On obtient donc une grande reproductibilité de la géométrie des formes, pour un type donné de chaussure, toutes les formes réalisées devenant parfaitement interchangeables. La grande précision obtenue facilite aussi la digitalisation, notamment pour l'extension des pointures.

De toute façon, l'invention sera mieux comprise à l'aide de la description qui suit, en référence au dessin schématique annexé représentant, à titre d'exemple, un mode d'exécution de cette forme avec dispositif de préhension, et illustrant aussi le mode d'obtention de cette forme.
Figure 1 est une vue en perspective de l'insert, à noyer dans la matière coulée de la forme ;
Figure 2 est une vue en coupe, illustrant l'opération de coulée de cette matière ;
Figure 3 est une autre vue en coupe, illustrant l'opération d'usinage final de la forme ;
Figure 4 est une vue de côté de la forme, dans son état final.

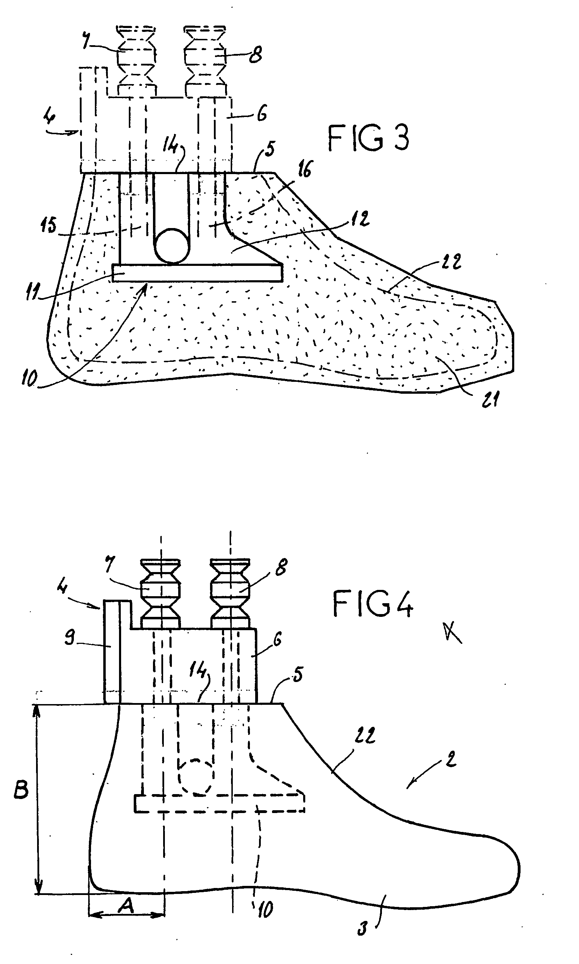

En se référant d'abord à la figure 4, la forme pour la fabrication de chaussures, désignée dans son ensemble par le repère 2, comprend d'une part un corps 3, et d'autre part un dispositif de préhension ou « préhenseur » 4. Le corps 3 de la forme, réalisé en matière synthétique, reproduit les caractéristiques d'un pied, pour servir de gabarit lors de la fabrication d'une chaussure. Le préhenseur 4, dépassant au-dessus de la face supérieure 5 du corps 3 de la forme 2, sert à la manipulation et au blocage de la forme 2. Dans l'exemple illustré, ce préhenseur 4 comprend, d'une part, une plaque ou un bloc allongé 6, appliqué sur la face supérieure 5 du corps 3 de la forme 2, et d'autre part, deux éléments tubulaires allongés 7 et 8, parallèles entre eux et perpendiculaires à la face supérieure 5 du corps 3, les parties supérieures des deux éléments 7 et 8 étant conformées en « diabolo » ; le bloc 6 porte, à l'arrière, une cellule de codage 9 (cette structure de préhenseur étant connue en soi par le brevet français N° 2 705 872).

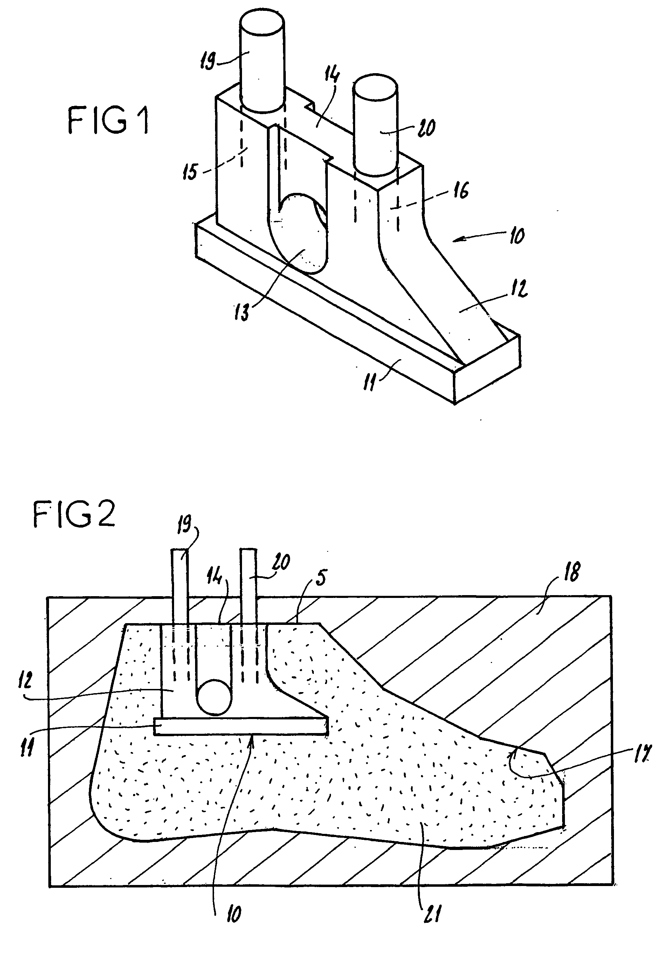

Pour lier le préhenseur 4 au corps 3 de la forme 2, il est prévu un insert 10, noyé dans la matière du corps 3. L'insert 10, représenté seul sur la figure 1, est une pièce métallique qui comporte une embase 11, surmontée d'un voile vertical 12 traversé par une ouverture centrale 13. Dans la face supérieure 14 du voile 12 sont percés deux trous taraudés parallèles 15 et 16, qui s'étendent de part et d'autre de l'ouverture 13. Les deux trous taraudés 15 et 16 sont prévus pour recevoir les extrémités inférieures filetées des deux éléments allongés 7 et 8 du préhenseur 4, ces éléments 7 et 8 traversant le bloc 6 du préhenseur 4, et dépassant sous ledit bloc 6. La face supérieure 14 du voile 12, donc de l'insert 10, se situe au niveau de la face supérieure 5 du corps 3 de la forme 2.

Pour fabriquer une telle forme 2, l'insert 10 précédemment décrit est placé à l'intérieur de la cavité 17 d'un moule 18, l'insert 10 pouvant être maintenu par des tiges filetées 19 et 20 vissées respectivement dans ses deux trous taraudés 15 et 16 - voir figure 2. La matière synthétique 21, destinée à constituer le corps 3 de la forme 2, est coulée à l'intérieur de la cavité 17 du moule 18, de manière à noyer l'insert 10. La configuration de l'insert 10 assure son parfait ancrage dans la matière coulée 21.

Après durcissement de la matière synthétique 21, la pièce coulée obtenue, constituant une ébauche de la forme 2, est démoulée. Les tiges filetées 19 et 20 sont alors retirées, par dévissage, et le préhenseur 4 est mis en place, par vissage de ses deux éléments allongés 7 et 8 dans les deux trous taraudés 15 et 16 de l'insert 10, en remplacement des tiges filetées 19 et 20 précitées - voir figure 3.

Le préhenseur 4 se trouvant ainsi mis en place, les deux éléments allongés 7 et 8 de ce préhenseur 4, désormais liés à l'insert 10, sont utilisés comme support et comme référence spatiale, pour une opération d'usinage effectuée sur l'ébauche de la forme. Cette opération d'usinage permet de donner au corps 3 de la forme 2 son contour définitif 22, tel qu'il a été prédéterminé en fonction des caractéristiques du pied (pointure, pied droit ou gauche) et de la chaussure à réaliser sur cette forme 2.

Ainsi, l'on obtient finalement la forme 2 avec préhenseur 4, telle que représentée sur la figure 4. Le procédé, précédemment décrit et illustré au dessin, permet l'obtention économique de formes 2 d'une grande précision dimensionnelle, avec une parfaite reproductibilité de leurs caractéristiques géométriques. Par exemple, la distance horizontale A entre l'axe de l'élément 7 du préhenseur 4, et le point le plus en arrière du talon de la forme 2, peut être obtenue avec une grande précision ; il en est de même pour les distances verticales, telles que celle indiquée en B, à savoir la hauteur du corps 3 de la forme 2. Le fait que la face supérieure 14 de l'insert 10 se situe dans le plan de la face supérieure 5 du corps 3 est ici important, puisque ce plan sert d'appui au préhenseur 4, donc de référence en hauteur.

Les détails de l'insert, la configuration du dispositif de préhension ou les accessoires portés par ce dispositif peuvent donner lieu à des variantes.

## Revendications

1. Procédé d'obtention d'une forme pour la fabrication de chaussures, plus particulièrement d'une forme prévue pour être utilisée dans une installation automatique ou semi-automatique de fabrication de chaussures, la forme (2) étant pourvue d'un dispositif de préhension (4) pour sa saisie et/ou son immobilisation par des organes extérieurs complémentaires, le procédé comprenant :
- la réalisation d'une ébauche de la forme, en coulant une matière (21) notamment synthétique dans un moule (17, 18) à l'intérieur duquel a été préalablement placé un insert (10), prévu pour recevoir les éléments (7,8) du dispositif de préhension (4),
- puis la mise en place du dispositif de préhension (4) en le liant à l'insert (10),
**caractérisé en ce que** l'on réalise une finition de la forme (2) par un usinage de l'ébauche, pour lui donner sa configuration définitive (22), en utilisant les éléments (7,8) du dispositif de préhension (4), liés à l'insert (10), comme support et référence spatiale pour l'opération d'usinage.

2. Procédé selon la revendication 1, pour l'obtention d'une forme dans laquelle l'insert (10) se présente comme une pièce métallique, dans laquelle sont ménagés deux trous taraudés parallèles (15, 16) prévus pour recevoir deux éléments allongés parallèles (7, 8) avec extrémités filetées, appartenant au dispositif de préhension (4), **caractérisé en ce que** l'insert (10) est maintenu dans le moule (17,18) par des tiges filetées (19,20) vissées respectivement dans ses deux trous taraudés (15,16).

## Claims

1. Method for obtaining a last for manufacturing footwear, more particularly a last designed for use in an automatic or semi-automatic footwear manufacturing installation, the last (2) being provided with a grip device (4) so that it can be grasped and/or immobilized by complementary external members, the method comprising:
- making a blank for the last, by casting a material (21), in particular a resin, in a mould (17, 18) inside which an insert (10) has been placed beforehand, this insert being designed to receive the elements (7, 8) of the grip device (4), and then
- putting the grip device (4) in place by attaching it to the insert (10),
**characterized in that** the last (2) is finished by machining the blank, to give it its definitive shape (22), using the elements (7, 8) of the grip device (4), attached to the insert (10), as a support and spatial reference for the machining operation.

2. Method according to Claim 1, for obtaining a last, in which the insert (10) is in the form of a metal part in which are made two parallel tapped holes (15, 16) designed to receive two parallel elongate elements (7, 8) with threaded ends belonging to the grip device (4), **characterized in that** the insert (10) is held in place in the mould (17, 18) by threaded rods (19, 20) screwed respectively into its two tapped holes (15, 16).

## Patentansprüche

1. Verfahren zum Erhalt eines Leistens für die Herstellung von Schuhen, insbesondere eines Leistens, der dafür vorgesehen ist, in einer automatischen oder halbautomatischen Schuhherstellungsanlage verwendet zu werden, wobei der Leisten (2) mit einer Griffvorrichtung (4) versehen ist, damit er ergriffen und/oder durch komplementäre äußere Elemente immobilisiert werden kann, wobei das Verfahren Folgendes umfasst:
- Herstellung eines Vorformlings des Leistens, indem ein Material (21), insbesondere ein Kunststoffmaterial, in eine Form (17, 18) gegossen wird, in die zuvor ein Einsatz (10) platziert wurde, der dazu vorgesehen ist, die Elemente (7, 8) der Griffvorrichtung (4) aufzunehmen,
- anschließend die Platzierung der Griffvorrichtung (4), indem sie mit dem Einsatz (10) verbunden wird,
**dadurch gekennzeichnet, dass** ein Schlichten des Leistens (2) durch eine maschinelle Bearbeitung des Vorformlings durchgeführt wird, um ihm seine endgültige Konfiguration (22) zu verleihen, wobei die mit dem Einsatz (10) verbundenen Elemente (7, 8) der Griffvorrichtung (4) als Stütze und räumlichen Bezug für den Bearbeitungsvorgang verwendet werden.

2. Verfahren nach Anspruch 1 zum Erhalt eines Leistens, in dem der Einsatz (10) als ein Metallteil mit zwei parallelen Löchern (15, 16) mit Innengewinde vorliegt, die zur Aufnahme von zwei parallelen länglichen Elementen (7, 8) mit Enden mit Außengewinde vorgesehen sind, die zur Griffvorrichtung (4) gehören, **dadurch gekennzeichnet, dass** der Einsatz (10) durch mit Außengewinde versehene Stangen (19, 20), die jeweils in seine beiden Löcher (15, 16) mit Innengewinde eingeschraubt sind, in der Form gehalten wird.
